# EUROPÄISCHE PATENTSCHRIFT

(11) **EP 0 961 038 B1**
(45) Veröffentlichungstag und Bekanntmachung des Hinweises auf die Patenterteilung: **24.04.2002**
(21) Anmeldenummer: 99108647.1
(22) Anmeldetag: 12.05.1999
(51) Int. Cl.: F16B 2/00

(54) **Verbindungselement zur kraftschlüssigen Verbindung von Bauteilen**
Connecting element for frictional connection of parts
Elément pour la connection des éléments par friction

(30) Priorität: 28.05.1998 DE 19823928
(43) Veröffentlichungstag der Anmeldung: 01.12.1999
(73) Patentinhaber: Wacker-Chemie GmbH, 81737 München (DE)
(72) Erfinder: Lukschandel, Jörg, 87439 Kempten (DE)
(74) Vertreter: Potten, Holger

(56) Entgegenhaltungen:
- GB-A- 1 542 116
- US-A- 3 692 341
- US-A- 3 828 515
- US-A- 4 154 276
- US-A- 4 525 098
- US-A- 5 259 280

## Beschreibung

Die Erfindung betrifft einen Formkörper umfassend zwei Werkstücke sowie ein Verbindungselement zur kraftschlüssigen Verbindung von Bauteilen.

Kraftschlüssige Verbindungen werden in allen Bereichen des Maschinenbaus häufig zur Übertragung von Querkräften oder Drehmomenten eingesetzt. Die Größe der jeweils übertragbaren Kraft hängt neben den konstruktiven Gegebenheiten in erster Linie vom Haftreibungswert (Haftbeiwert) der miteinander verbundenen Bauteiloberflächen ab. Stahl/Stahl-Paarungen weisen typischerweise Haftbeiwerte von 0,15 auf, was bei den zunehmend steigenden Anforderungen an Maschinenbauteile häufig für eine sichere kraftschlüssige Verbindung nicht ausreicht. Maßnahmen zur Reibungserhöhung, z.B. bei Schrumpfverbindungen sind schon aus der Frühzeit des Maschinenbaus bekannt: So wurde bereits 1860 empfohlen, Sand in den Fügespalt zu streuen, um den Sitz von Zahnrädern auf Wellen zu verbessern. Dabei werden die Sandkörner unter dem Einfluß der Schrumpfkräfte in die Oberflächen der zu fügenden Bauteile eingedrückt und bewirken einen gewissen Formschluß mit Eindringtiefen von einigen Zehntel Millimetern. Es ist in der Praxis allerdings kaum möglich, lose oder in streichfähige Trägermedien eingearbeitete Partikel gleichmäßig in den Fügespalt einzubringen.

Prinzipiell ist dieses Verfahren wirksam, die Kerbwirkung gröberer Partikel im Fügespalt bringt jedoch ein stark erhöhtes Risiko von Dauerbrüchen mit sich. Wenn ein solches Risiko durch die jeweils herrschenden Betriebsbedingungen gegeben ist, dürfen die Eindrücke der zur Kraftübertragung genutzten Partikel in den Bauteiloberflächen nicht nennenswert tiefer sein als die von der vorausgegangenen Bearbeitung herrührenden Rauheitstiefen.

Es sind verschiedene Verfahren bekannt, um das Einbringen von harten Partikeln in den Fügespalt gleichmäßig und reproduzierbar zu bewerkstelligen. DOS 23 64 275 vom 10.07.1975 (entspricht GB 1483124) beschreibt, daß auf eine von zwei zusammenwirkenden Flächen eine Hartstoffkörper enthaltende Schicht durch Aufdampfen, Aufspritzen, Aufsintern oder Diffusion eines Fremdstoffs in die Bauteiloberfläche aufgebracht wird.

Peeken et.al. stellen in "ant-Antriebstechnik" 20, Nr. 1-2, Jan.-Feb. 1981, Oberflächenschichten für kraftschlüssige Momentenübertragung vor, die auf galvanotechnischem Wege durch gemeinsame Abscheidung feiner Hartstoffkörner mit einer metallischen Bindephase hergestellt werden. Mit derartigen Schichten wird die Haftreibung einer Welle-Nabe-Schrumpfverbindung mehr als verdoppelt. Diese Schichten ermöglichen bei Umlaufbiegebelastung sogar noch bessere Haftbeiwerte als bei rein statischer Beanspruchung.

Die bisher beschriebenen Maßnahmen zur Erhöhung der Haftreibung gehen allesamt davon aus, daß eines der beiden zu verbindenden Bauteile direkt mit reibungserhöhenden Schichten belegt wird. In der Praxis kommt es jedoch häufig vor, daß die gewünschte Beschichtung aus Verfahrensgründen auf keine der beiden Komponenten aufgebracht werden kann.

Das Patent CH-PS 192 197 offenbart Papier oder Leinen als flexibles Trägermaterial für eine beidseitig aufgebrachte Hartstoffkörner enthaltende Schicht. Als Wirkmechanismus für die Erhöhung der Haftung wird ein mechanisches Übereinanderschieben keilförmiger Hartstoffpartikel durch Relativbewegung der zu verbindenden Bauteile beschrieben.
Auch JP 6-147206 offenbart Papier oder Leinen als flexibles Trägermaterial für Hartstoffkörner. Die in den Schriften genannten Verbindungselemente sind nicht in der Lage, hohe Querkräfte zu übertragen. Sie sind damit für viele Anwendungen ungeeignet.

DE 31 49 596 A1 offenbart eine Verbindung, die unter Verwendung grober Hartstoffkörper hergestellt wird. Es wird die Benutzung einer elastischen Trägerfolie aus einem verformbaren Material beschrieben, die selbst nicht an der Kraftübertragung teilnimmt

Nachteiligerweise ist diese Verbindung unlösbar und ermöglicht somit keine reversible Verbindung der zu fügenden Werkstücke.

Verschiedene weitere Patentschriften, so US-A-4 525 098, US-A-4 154 276, US-A-3 828 515, US-A-3 692 341 beschreiben Methoden, Hartstoffkörper oder speziell geformte Körper mittels eines Trägerfilms aus zumeist organischen Substanzen, in allen Fällen jedoch aus leicht verformbarem Material geringer Eigenfestigkeit, im Fügespalt kraftschlüssiger Verbindungen zu positionieren. Beim Fügen bzw. Verpressen der Bauteile dringen die Hartstoffpartikel in beide Oberflächen ein und übertragen die auftretenden Querkräfte direkt, ohne daß der Trägerfilm an dieser Kraftübertragung beteiligt ist.

Derartige Verbindungen sind zwar fallweise wieder lösbar, die in die Fügeflächen eingedrungenen Partikel bleiben jedoch unkontorllierbar in einer der Oberflächen stecken. Die reproduzierbare Wiederverwendung der einmal gelösten Verbindung ist dadurch nicht möglich.

Der vorliegenden Erfindung liegt die Aufgabe zugrunde, eine reibungserhöhende spielfreie reversible Verbindung von zu fügenden Werkstücken zur Verfügung zu stellen, die die Nachteile des Stands der Technik vermeidet.

Diese Aufgabe wird erfindungsgemäß durch einen Formkörper, umfassend 2 Werkstücke sowie ein Verbindungselement (1), welches die reibungserhöhende spielfreie reversible Verbindung der zu fügenden Werkstücke ermöglicht, wobei das Verbindungselement, aus einer federelastischen Folie (4) mit einer Eigenfestigkeit, die mindestens ebenso hoch ist wie die Eigenfestigkeit der zu fügenden Werkstücke besteht, wobei die federelastische Folie an ihrer Oberfläche Partikel (3) definierter Größe trägt, und diese Partikel aus einem Material mit einer Druck- und Scherfestigkeit bestehen, welche jene der zu fügenden Werkstücke übertrifft, dadurch gekennzeichnet, daß die Partikel mittels einer Bindephase (5) auf der federelastischen Folie (4) fixiert sind, wobei die Bindephase (5) eine Festigkeit hat, die jener der zu fügenden Flächen der Werkstücke zumindest entspricht.

Die Partikel aus einem Material mit einer Druck- und Scherfestigkeit, welche jene der zu fügenden Werkstücke übertrifft, werden im Folgenden als harte Partikel bezeichnet. Unter dünnen Folien sind vorzugsweise Folien einer Stärke von ≤ 0,2 mm zu verstehen.

Das Verbindungselement, im folgenden auch Reibungsfolie genannt, hat folgende Vorteile gegenüber bekannten kraftschlüssigen Verbindungen:
- die mit einer nur partiellen Beschichtung größerer oder sperriger Werkstücke verbundenen Schwierigkeiten treten nicht auf.
- es ermöglicht die reversible Verbindung von Werkstücken, die für eine direkte Beschichtung nicht in Frage kommen auch in Fallen, in denen große Querkräfte auftreten.
- der Haftbeiwert kraftschlüssiger Verbindungen wird um mindestens 50 %, in der Regel sogar 100 - 200 %, erhöht.
- es ist wirtschaftlich herstellbar.
- es ist leicht auch an kompliziert geformte oder nicht ebene Fügeflächen anzupassen.
- es erfordert keinen nennenswerten Zusatzaufwand bei der Montage

Die harten Partikel bestehen vorzugsweise aus einem Material, das unter den jeweiligen Einsatzbedingungen weder mit den Werkstoffen der zu fügenden Werkstücke noch mit Umgebungsmedien chemisch reagiert. Es handelt sich dabei vorzugsweise um einen mineralischen Werkstoff.

Besonders bevorzugt sind die harten Partikel ausgewählt aus der Gruppe der Hartstoffe. Beispiele für Hartstoffe sind Carbide wie SiC, WC und B₄C, oder Nitride wie Si₃N₄ und kubisches BN oder Boride oder SiO₂ oder Al₂O₃ oder Diamant.

Die Größe der harten Partikel ist so zu wählen, daß die Beschädigung der Fügeflächen durch das Eindrücken der Partikel kein unzulässiges Ausmaß erreicht. Dies ist vorzugsweise dann sichergestellt, wenn der Partikeldurchmesser nicht mehr als das Dreifache der vom Bearbeiten der Fügeflächen herrührenden Rauhtiefe der Fügeflächen beträgt. Eine Partikelgröße mit einem maximalen Durchmesser von 0,1 mm erfüllt im allgemeinen diese Forderung.

Besonders bevorzugt werden harte Partikel mit einem maximalen Durchmesser von 15 µm eingesetzt.

Idealerweise wären die eingesetzten harten Partikel alle gleich groß. In dem bevorzugten Korngrößenbereich ist dies jedoch technisch nicht zu realisieren. Verschiedene der obengenannten bevorzugten Hartstoffe sind handelsüblich in Form sehr eng geraffter Körnungen erhältlich, bei denen die Streuung um einen angegebenen Nominaldurchmesser nicht mehr als ± 50 % beträgt. Dies ist insbesondere bei Diamant und kubischem BN der Fall, in eingeschränktem Maße auch bei Al₂O₃, SiC, B₄C. Solche Körnungen sind vorzugsweise als harte Partikel im erfindungsgemäßen Bauteil geeignet. Aus dem für günstig gehaltenen Durchmesserbereich von bis zu 15 µm werden bevorzugt handelsübliche Körnungen mit 6 µm oder 10 µm mittlerem Durchmesser ausgewählt.

Die Zahl der harten Partikel pro Flächeneinheit der Kontaktflächen der zu fügenden Werkstücke ist vorzugsweise so zu wählen, daß die zum Fügen der Werkstücke verfügbare Normalkraft ausreicht, um ein Eindrücken der Partikel in die Gegenfläche zu gewährleisten. Dies wird im allgemeinen dann der Fall sein, wenn nicht mehr als 30 % der Reibungsfolie mit harten Partikeln belegt ist.

Eine zu geringe Belegung führt zum vollständigen Eindrücken der harten Partikel und somit zu metallischem Kontakt der Fügeflächen mit der Gefahr der Bildung von sog. Passungsrost, was ein Absinken der übertragbaren Kräfte bewirken kann. Dies ist dann der Fall, wenn die Reibungsfolie zu weniger als 3 % mit Partikeln belegt ist.

Vorzugsweise werden Reibungsfolien so ausgeführt, daß die darin eingebetteten Partikel 5 bis 15 % der Reibungsfolie bedecken.

Die dünne flexible Folie mit einer mindestens ebenso hohen Eigenfestigkeit wie die Eigenfestigkeit der zu fügenden Werkstücke ist vorzugsweise als Band aus metallischem Material, z.B. als kaltgewalztes Federband, ausgebildet, auf dem mittels einer Bindephase die harten Partikel fixiert sind.

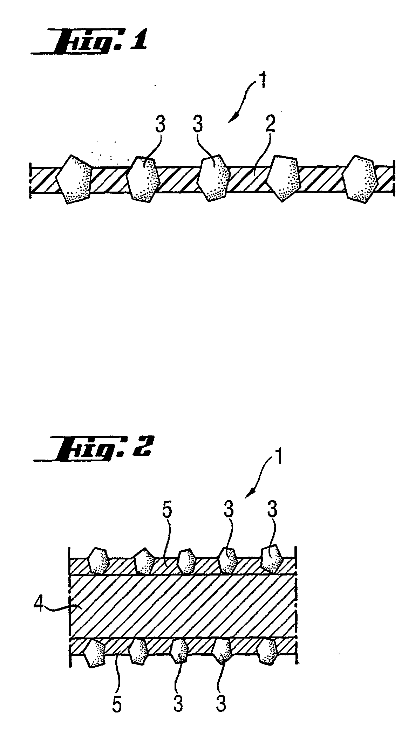

Die Bindephase wird dabei vorzugsweise mittels galvanotechnischer Verfahren auf die flexible Folie aufgebracht. Eine solche mehrlagige Reibungsfolie ist in Fig.1 dargestellt. Die harten Partikel stehen nur mit jeweils einer der zu fügenden Flächen in Berührung und die Kraft wird mittels einer Zwischenlage ausreichender Eigenfestigkeit übertragen.

Bei hochbeanspruchten kraftschlüssigen Verbindungen handelt es sich im allgemeinen um metallische Werkstücke, überwiegend aus Eisenwerkstoffen, so daß die Forderung nach "ausreichender Festigkeit" des Trägermaterials im wesentlichen ebenfalls nur von Stahl erfüllt wird. Die weiteren Anforderungen nach Beschichtbarkeit, Ebenheit, Planparallelität, Flexibilität und Elastizität werden von Bandstahl, insbesondere Federbandstahl zufriedenstellend erfüllt. Für die bevorzugten Ausführungsformen von beidseitig beschichteter Reibungsfolie wird daher handelsüblicher unlegierter Federbandstahl, vorzugsweise mit einer Dicke von 0,1 mm verwendet.

Die Fixierung der kraftübertragenden Partikel auf dem Trägermaterial muß ausreichend stabil sein, um die zu erwartenden Querkräfte sicher übertragen zu können. Die dazu erforderliche Bindephase muß daher so wie das Trägermaterial eine Festigkeit haben, die jener der zu fügenden Flächen zumindest entspricht.

Für das Aufbringen der Bindephase mit den harten Partikeln kommen verschiedene in der Beschichtungstechnik übliche Verfahren in Frage. So kann beispielsweise ein organisches Material, etwa ein Lack, in dem die notwendige Menge Partikel homogen dispergiert ist, in einfacher Weise mittels Rakel auf die Oberfläche des Trägermaterials gestrichen werden, um dort einen gleichmäßigen, dünnen Film zu erzeugen, aus dem nach dem Trocknen die Partikel überstehen. Da im Maschinenbau überwiegend metallische Bauteile zum Einsatz kommen, ist die Festigkeit einer organischen Bindephase meist unzureichend. Es muß daher in der Regel eine metallische Bindephase für die Fixierung der harten Partikel auf der Oberfläche des Trägermaterials gewählt werden.

Die Hartstoff/Metallschicht wird dabei vorzugsweise mittels galvanotechnischer Verfahren, z. B. einer außenstromlosen (= chemischen) Vernickelung erzeugt. Solche Verfahren sind bekannt und beispielsweise in den bereits genannten Literaturstellen beschrieben. Die auf das federelastische flexible Material aufgebrachten Chemisch-Nickel-Schichten können durch eine Wärmebehandlung bis ca. 400°C ausgehärtet werden, wodurch die Haftung auf dem flexiblen Material verbessert und die Eigenhärte der Schicht erhöht wird.

Grundsätzlich können die Reibungsfolien bei jeder Art von kraftschlüssigen Verbindungen im gesamten allgemeinen Maschinenbau eingesetzt werden, insbesondere dann, wenn die von den konstruktionsbedingt vorliegenden Werkstückoberflächen übertragbaren Kräfte nicht ausreichen. Dies kann insbesondere bei Klemm- oder Preßverbindungen in Anwesenheit von Schmierstoffen der Fall sein, aber durchaus auch auf trockene Paarungen zutreffen.

### Beispiele:

### Beispiel 1: Herstellung eines Verbindungselements

Das Verbindungselement ist eine ringförmige Scheibe aus beidseitig beschichteter 0,1 mm dicker Stahlfolie. Die reibungserhöhende Beschichtung besteht aus Diamantpartikeln von 6 µm mittlerem Durchmesser in einer Bindephase aus Chemisch Nickel in einer Schichtdicke von 4 um. Die Belegungsdichte der Folienoberfläche mit Diamantpartikeln beträgt 7 Flächen-%.

Zur Herstellung dieses Verbindungselements wird zunächst eine ringförmige Scheibe in den geforderten Abmessungen aus unbeschichtetem 0,1 mm dickem Federstahlblech gestanzt. Es ist zwar grundsätzlich möglich, solche Scheiben auch aus bereits beidseitig mit reibungserhöhender Beschichtung versehenem Blech zu fertigen, dabei entsteht aber sehr viel teurer Abfall durch Veschnitt. Üblicherweise wird eine größere Zahl von Scheiben gleichzeitig behandelt.

Die vorgefertigten Scheiben werden auf geeignete Halterungen gesteckt und nach den allgemeinen Regeln der Galvanotechnik durch Entfetten, Beizen und Aktivieren vorbehandelt.

Sodann wird der Warenträger mit den Scheiben in ein Chemisch Nickel Bad getaucht, in dem Diamantpulver mit 6 µm mittlerem Partikeldurchmesser dispergiert ist. Die Menge des dispergierten Diamantpulvers wird so gewählt, daß bei den im Beschichtungsbad herrschenden Parametern (Badbewegung, Abscheidegeschwindigkeit) der angestrebte Anteil von Diamant in der abgeschiedenen Metallschicht der gewünschten Dicke von etwas mehr als dem halben Durchmesser der Diamantpartikel erreicht wird. Bei üblichen Verfahrensbedingungen beträgt die Tauchzeit etwa 15 Minuten.

Der Warenträger mit den nunmehr beschichteten Scheiben wird sodann aus dem Beschichtungsbad entnommen und in einem Ultraschallbad gereinigt, um nur lose anhaftende Diamantpartikel zu entfernen.

Die gereinigten Scheiben werden vom Warenträger abgenommen und einer Wärmebehandlung von 2 Std. bei mindestens 150°C unterzogen. Diese Behandlung verbessert die Haftung der Chemisch-Nickel-Schicht auf der Stahlfolie sowie den Sitz der Partikel in der Schicht selbst.

### Beispiel 2: Herstellung eines erfindungsgemäßen Formkörpers unter Verwendung eines Verbindungselements gemäß Beispiel 1

Eine Schwungmasse aus Grauguß ist stirnseitig an einer rotierenden Welle aus vergütetem Stahl zu befestigen. Eine formschlüssige Verbindung mittels Keil ist nicht realisierbar, da die genaue Positionierung erst bei der Montage erfolgt. Die Befestigung erfolgt über eine Zentralschraube, die eine Normalkraft von 16.000 N ermöglicht. Die Anwesenheit von Schmierstoffen an den Kontaktflächen ist nicht auszuschließen. Das geforderte Haltemoment beträgt 500 Nm, erreicht werden aber nur 350 Nm (trocken) bzw. 240 Nm (geschmiert).

Durch das Einlegen eines Verbindungselements gemäß Beispiel 1 wird bei der zur Verfügung stehenden Normalkraft von 16.000 N ein Haltemoment von 540 Nm erzielt. Um bei der gegebenen Konstruktion das Einlegen der Folie zu ermöglichen, muß diese elastisch gebogen werden.

## Patentansprüche

1. Formkörper, umfassend 2 Werkstücke sowie ein Verbindungselement (1), welches die reibungserhöhende spielfreie reversible Verbindung der zu fügenden Werkstücke ermöglicht, wobei das Verbindungselement, aus einer federelastischen Folie (4) mit einer Eigenfestigkeit, die mindestens ebenso hoch ist wie die Eigenfestigkeit der zu fügenden Werkstücke, besteht, wobei die federelastische Folie an ihrer Oberfläche Partikel (3) definierter Größe trägt, und diese Partikel aus einem Material mit einer Druck- und Scherfestigkeit bestehen, welche jene der zu fügenden Werkstücke übertrifft, **dadurch gekennzeichnet, daß** die Partikel mittels einer Bindephase (5) auf der federelastischen Folie (4) fixiert sind, wobei die Bindephase (5) eine Festigkeit hat, die jener der zu fügenden Flächen der Werkstücke zumindest entspricht.

2. Formkörper gemäß Anspruch 1, **dadurch gekennzeichnet, daß** die Partikel (3) aus einem Material bestehen, das unter den jeweiligen Einsatzbedingungen weder mit den Werkstoffen der zu fügenden Werkstücke noch mit Umgebungsmedien chemisch reagiert.

3. Formkörper gemäß Anspruch 1, **dadurch gekennzeichnet, daß** die Partikel (3) ausgewählt sind aus der Gruppe der Hartstoffe.

4. Formkörper gemäß einem der Ansprüche 1 bis 3, **dadurch gekennzeichnet, daß** die Partikel (3) einen Durchmesser von nicht mehr als dem Dreifachen der vom Bearbeiten der Fügeflächen herrührenden Rauhtiefe der Fügeflächen haben.

5. Formkörper gemäß einem der Ansprüche 1 bis 4, **dadurch gekennzeichnet, daß** die Streuung der Partikel (3) um einen gegebenen Nominaldurchmesser nicht mehr als ± 50 % beträgt.

6. Formkörper gemäß einem der Ansprüche 1 bis 5, **dadurch gekennzeichnet, daß** die Zahl der Partikel (3) pro Flächeneinheit der Kontaktflächen der zu fügenden Werkstücke so gewählt ist, daß die zum Fügen der Werkstücke verfügbare Normalkraft ausreicht, um ein Eindrücken der Partikel in die Gegenfläche zu gewährleisten.

7. Formkörper gemäß einem der Ansprüche 1 bis 6, **dadurch gekennzeichnet, daß** nicht mehr als 30 % und nicht weniger als 3 % der Reibungsfolie mit harten Partikeln belegt ist.

8. Formkörper gemäß einem der Ansprüche 1 bis 7, **dadurch gekennzeichnet, daß** die Partikel (3) 5 bis 15 % des Verbindungselements bedecken.

9. Verbindungselement (1) zur reibungserhöhenden spielfreien reversiblen Verbindung von zu fügenden Werksstücken, bestehend aus einer federelastischen Folie aus metallischem Material (4), wobei die federelastische Folie an ihrer Oberfläche Partikel (3) definierter Größe trägt, und diese Partikel ausgewählt sind aus der Gruppe der Hartstoffe, **dadurch gekennzeichnet, daß** die Partikel mittels einer metallischen Bindephase (5) auf der federelastischen Folie (4) fixiert sind, wobei die metallische Bindephase (5) mittels eines galvanotechnischen Verfahrens auf die federelastische Folie aufgebracht wurde.

10. Verfahren zur Herstellung eines Verbindungselements gemäß Anspruch 9, **dadurch gekennzeichnet, daß** auf eine federelastische Folie aus metallischem Material, mittels an sich bekannter, in der Beschichtungstechnik üblicher galvoanotechnischer Verfahren Partikel definierter Größe ausgewählt aus der Gruppe der Hartstoffe, aufgebracht werden.

## Claims

1. Shaped body, comprising 2 workpieces and a connecting element (1) which permits the friction-increasing reversible connection, which is free from play, of the workpieces to be joined together, the connecting element comprising a resilient film (4) with an inherent strength which is at least as high as the inherent strength of the workpieces to be joined together, the resilient film bearing particles (3) of defined size at its surface, and these particles consisting of a material with a compressive and shear strength which exceeds that of the workpieces to be joined together, **characterized in that** the particles are fixed on the resilient film (4) by means of a binding phase (5), the binding phase (5) having a strength which at least corresponds to that of the surfaces of the workpieces to be joined together.

2. Shaped body according to Claim 1, **characterized in that** the particles (3) consist of a material which, under the particular conditions of use, does not react chemically either with the materials of the workpieces to be joined together or with environmental media.

3. Shaped body according to Claim 1, **characterized in that** the particles are selected from the group consisting of the hard materials.

4. Shaped body according to one of Claims 1 to 3, **characterized in that** the particles (3) have a diameter of no more than three times the peak-to-valley height of the joint surfaces, which height stems from the machining of the joint surfaces.

5. Shaped body according to one of Claims 1 to 4, **characterized in that** the scatter of the particles about a given nominal diameter amounts to no more than ± 50%.

6. Shaped body according to one of Claims 1 to 5, **characterized in that** the number of particles (3) per unit surface area of the contact surfaces of the workpieces to be joined together is selected in such a way that the normal force which is available for joining the workpieces together is sufficient to ensure that the particles are pressed into the opposite surface.

7. Shaped body according to one of Claims 1 to 6, **characterized in that** no more than 30% and no less than 3% of the friction film/foil is covered with hard particles.

8. Shaped body according to one of Claims 1 to 7, **characterized in that** the particles (3) cover 5 to 15% of the connecting element.

9. Connecting element (1) for the friction-increasing reversible connection, which is free from play, of workpieces to be joined together, comprising a resilient foil of metallic material (4), the resilient foil bearing particles (3) of defined size at its surface, and these particles being selected from the group of hard materials, **characterized in that** the particles are fixed on the resilient foil (4) by means of a metallic binding phase (5), the metallic binding phase (5) having been applied to the resilient film by means of an electrodeposition method.

10. Method for producing a connecting element according to Claim 9, **characterized in that** particles of defined size selected from the group of hard materials are applied to a resilient foil of metallic material by means of electrodeposition methods known per se and customary in coating technology.

## Revendications

1. Corps de forme, comprenant 2 pièces ainsi qu'un élément de liaison (1), qui permet la liaison réversible sans jeu sous friction accrue des pièces à joindre, dans lequel l'élément de liaison se compose d'un film à déformation élastique (4) avec une résistance propre, qui est au moins aussi élevée que la résistance propre des pièces à joindre, dans lequel le film à déformation élastique porte à sa surface des particules (3) de taille définie, et ces particules se composent d'une matière présentant une résistance à la compression et au cisaillement, qui dépasse celle des pièces à joindre, **caractérisé en ce que** les particules sont fixées sur le film à déformation élastique (4) au moyen d'une phase liante (5), la phase liante (5) présentant une résistance qui correspond à celle des faces à joindre des pièces.

2. Corps de forme suivant la revendication 1, **caractérisé en ce que** les particules (3) se composent d'une matière, qui ne réagit chimiquement, dans les conditions d'utilisation respectives, ni avec les matériaux des pièces à joindre ni avec des milieux ambiants.

3. Corps de forme suivant la revendication 1, **caractérisé en ce que** les particules (3) sont choisies parmi le groupe des substances dures.

4. Corps de forme suivant l'une quelconque des revendications 1 à 3, **caractérisé en ce que** les particules (3) présentent un diamètre qui n'est pas supérieur au triple de la profondeur de rugosité des faces à joindre, résultant de l'usinage des faces à joindre.

5. Corps de forme suivant l'une quelconque des revendications 1 à 4, **caractérisé en ce que** la dispersion des particules (3) autour d'un diamètre nominal donné ne dépasse pas ± 50%.

6. Corps de forme suivant l'une quelconque des revendications 1 à 5, **caractérisé en ce que** le nombre des particules (3) par unité de surface des faces de contact des pièces à joindre est choisi de telle manière que l'effort normal disponible pour la jonction des pièces suffise pour garantir la pénétration des particules dans la face opposée.

7. Corps de forme suivant l'une quelconque des revendications 1 à 6, **caractérisé en ce que** pas plus de 30% et pas moins de 3% du film de friction sont garnis de particules dures.

8. Corps de forme suivant l'une quelconque des revendications 1 à 7, **caractérisé en ce que** les particules (3) couvrent de 5 à 15% de l'élément de liaison.

9. Elément de liaison (1) pour l'assemblage réversible sans jeu sous friction accrue de pièces à joindre, se composant d'un film à déformation élastique en matériau métallique (4), dans lequel le film à déformation élastique porte à sa surface des particules (3) de taille définie, et ces particules sont choisies parmi le groupe des substances dures, **caractérisé en ce que** les particules sont fixées sur le film à déformation élastique au moyen d'une phase liante métallique (5), la phase liante métallique (5) ayant été déposée sur le film à déformation élastique (4) au moyen d'un procédé de galvanoplastie.

10. Procédé pour la fabrication d'un élément de liaison suivant la revendication 9, **caractérisé en ce que** l'on dépose sur un film à déformation élastique en matériau métallique des particules de taille définie, choisies parmi le groupe des substances dures, au moyen de procédés de galvanoplastie connus en soi, usuels dans le domaine technique du revêtement.
